# FASCICULE DE BREVET EUROPEEN

(11) **EP 2 749 628 B1**
(45) Date de publication et mention de la délivrance du brevet: **02.11.2016**
(21) Numéro de dépôt: 13198293.6
(22) Date de dépôt: 19.12.2013
(51) Int. Cl.: C10L 5/36, C10L 5/44

(54) **COMBUSTIBLE POUR CHAUDIÈRE À CHARBON CONTENANT DE LA BIOMASSE ET PROCÉDÉ DE FABRICATION CORRESPONDANT**
BRENNSTOFF FÜR KOHLEHEIZKESSEL, DER BIOMASSE ENTHÄLT, UND ENTSPRECHENDES HERSTELLUNGSVERFAHREN
FUEL FOR COAL-FIRED BOILER CONTAINING BIOMASS AND CORRESPONDING MANUFACTURING METHOD

(30) Priorité: 27.12.2012 FR 1262893
(43) Date de publication de la demande: 02.07.2014
(73) Titulaire: Europeenne de Biomasse, 75009 Paris (FR)
(72) Inventeur: Marin, M. Jean-Baptiste, 75004 PARIS (FR)
(74) Mandataire: Ermeneux, Bertrand

(56) Documents cités:
- EP-A1- 2 500 404
- WO-A1-2009/147361
- FR-A- 851 079
- GB-A- 328 082
- US-A- 12 159

## Description

### 1. Domaine de l'invention

Le domaine de l'invention est celui de l'énergie.

Plus précisément, l'invention concerne un combustible utilisable dans des chaudières à charbon, notamment d'une centrale thermique, ou des fours à charbon.

### 2. Etat de la technique

Le charbon constitue une source d'énergie disponible en grande quantité pour la production de chaleur et d'électricité à une échelle industrielle. Il est utilisé par exemple dans des chaudières à lit fluidisé circulant, des chaudières à charbon pulvérisé, des chaudières à grille ou des chaudières à cycle combiné et gazéification intégrée.

Un inconvénient des centrales thermiques au charbon connues est qu'elles rejettent des quantités importantes de gaz à effet de serre, d'oxyde de soufre (SOₓ) et d'oxyde d'azote (NOₓ).

Dans de nombreux pays et notamment en Europe, une réglementation destinée à limiter les émissions en NOₓ et en SOₓ des centrales au charbon a été mise en place. Des quotas d'émission de dioxyde de carbone (CO₂), assortis de sanctions financières en cas de dépassement de ces quotas, ont par ailleurs été instaurés pour les centrales au charbon d'une puissance supérieure à 20 MW, ce qui pénalise la rentabilité de ces centrales.

Ainsi par exemple les directives européennes 2001/80/CE et 2008/1/CE définissent les seuils limites de rejet d'oxyde de soufre, d'oxyde d'azote et de poussière dans l'atmosphère des centrales à charbon pulvérisé d'une puissance supérieure à 50 MW.

Afin de réduire ces émissions, on a pensé à développer une co-combustion d'un mélange de charbon et de biomasse dans les centrales au charbon. En effet, la biomasse présente des taux de soufre généralement inférieurs à ceux du charbon. En outre, le CO₂ produit par la combustion de biomasse étant d'origine biogénique, il n'est pas comptabilisé dans les émissions de CO₂ soumises à quota.

On a ainsi proposé d'utiliser de la biomasse d'origine diverse, par exemple des produits ou sous-produits de la filière bois et/ou des sous-produits agricoles et/ou des déchets de l'industrie agroalimentaire.

Cependant, brûler de la biomasse dans une chaudière au charbon impacte l'exploitation de la chaudière.

Ainsi, une combustion de biomasse est susceptible d'entraîner une corrosion plus rapide des échangeurs et/ou du surchauffeur de la chaudière, ce qui réduit leur durée de vie.

Une combustion de biomasse provoque également un encrassement accru du foyer et des brûleurs de la chaudière, et génère du mâchefer de mauvaise qualité, en raison d'une température de fusibilité des cendres de la biomasse plus faible que celle du charbon.

L'opérateur de la chaudière est donc contraint d'arrêter plus souvent la chaudière pour procéder aux opérations de maintenance, ce qui entraine des pertes d'exploitation. Il en résulte également une augmentation des coûts de maintenance du fait de l'allongement de la durée et de la complexité des opérations d'entretien.

En outre, il faut prévoir des équipements pour la manutention de la biomasse.

Par ailleurs, la disponibilité des sources d'approvisionnement en biomasse variant au cours des saisons, il est nécessaire d'adapter la composition de la biomasse, ce qui influe sur les performances de la chaudière.

C'est pourquoi, on limite généralement la masse de biomasse brulée dans une centrale au charbon conventionnelle à 10% de la masse de charbon consommée, en co-combustion.

Une combustion d'une quantité plus importante de biomasse requiert jusqu'à présent de réaliser des travaux couteux d'aménagement des centrales, par exemple pour permettre une injection séparée de la biomasse et du charbon dans le foyer des chaudières.

On a proposé de nombreuses formulations de combustible à partir de charbon et de biomasse.

La plupart de ces combustibles sont destinés à être brûlés dans des chaudières à usage domestique et ne sont pas adaptés pour être utilisés dans des centrales à charbon industrielles.

On connait du document WO 2009/147361 des pastilles de combustible destinées à être utilisées dans des centrales à charbon comprenant moins de 7% de charbon, formées de couches agglomérées de fines de charbon et de biomasse végétale telle que des déchets de bois.

Un inconvénient des pastilles décrites dans le document WO 2009/147361 est qu'elles présentent un pouvoir calorifique réduit et qu'elles ne sont pas utilisables dans des centrales au charbon de puissance importante.

### 3. Objectifs de l'invention

L'invention a donc notamment pour objectif de pallier les inconvénients de l'état de la technique cités ci-dessus.

Plus précisément, un objectif de l'invention est de fournir un combustible contenant de la biomasse utilisable seul dans une chaudière ou une centrale au charbon d'une capacité supérieure à 2 MW et avantageusement supérieure à 20 MW, sans adapter la chaudière ou la centrale.

Notamment, dans au moins un mode de réalisation particulier, l'invention a pour objectif de fournir un combustible présentant une température de fusibilité des cendres convenable pour une utilisation dans une centrale thermique au charbon.

Un objectif de l'invention est également de fournir un combustible dont la combustion produit une quantité limitée de gaz participant à la pollution atmosphérique, à l'effet de serre ou à la formation des pluies acides.

Un autre objectif de l'invention est de fournir un combustible qui soit d'un coût de revient réduit.

L'invention a également pour objectif de fournir un combustible dont la composition chimique est stable et la qualité énergétique est constante.

L'invention a encore pour objectif de proposer un combustible qui soit disponible en grande quantité, qui soit au moins partiellement renouvelable, et qui puisse être produit majoritairement à partir de ressources locales.

Encore un objectif de l'invention est de fournir un tel combustible dont le coût de transport soit compétitif.

Un autre objectif de l'invention est de fournir un combustible qui présente une température de fusibilité des cendres convenable.

### 4. Exposé de l'invention

Ces objectifs, ainsi que d'autres qui apparaitront par la suite sont atteints à l'aide d'un combustible apte à être utilisé dans une chaudière ou un four industriel à charbon, se présentant sous forme de granulés compactés.

Un tel combustible est notamment destiné à être utilisé dans des chaudières à grille vibrante, dans des chaudières à lit fluidisé circulant, dans des chaudières de type "spreader stocker", dans des chaudières automatiques à grille ou dans des chaudières à foyer volcan par exemple.

Selon l'invention, un tel combustible comprend 40 à 60% en masse de particules de bois, 20 à 30% en masse d'un mélange d'au moins deux issues provenant d'opérations de triage, calibrage et tamisage de productions agricoles de céréales, d'oléagineux ou de protéagineux et 10 à 25% en masse de fines de charbon fossile ou de charbon de bois, en proportions.

Les inventeurs ont en effet constaté, de façon inattendue, qu'une telle composition permettait d'obtenir un combustible pouvant être substitué au charbon dans une chaudière au charbon sans réduire significativement la durée de vie de la chaudière et sans augmenter de façon sensible les coûts de maintenance.

Par ailleurs, ce combustible présente l'avantage de réduire les émissions d'oxyde de soufre de 10 à 60% et les émissions d'oxyde d'azote de 5 à 30% par rapport à un charbon de qualité ordinaire. En outre le taux de matière volatile qu'il génère à la combustion s'avère convenable et les cendres produites sont aisément valorisables.

Il convient de noter que l'emploi d'un mélange d'au moins deux issues provenant de productions agricoles permet avantageusement d'obtenir un combustible dont on contrôle les émissions, quelle que soit la région de fabrication du combustible. D'autre part, en combinant plusieurs issues, il est envisageable de fournir un combustible de qualité énergétique sensiblement constante à toute saison.

On notera également que le combustible selon l'invention s'inscrit dans le cadre du règlement CE 800/2008 et de la directive 2009/28 et des schémas régionaux d'énergie renouvelable prévus par la loi 2009-967 du 3 août 2009.

De façon avantageuse, un tel combustible comprend 20 à 25% en masse de fines d'anthracite et/ou de houille, en proportions.

On obtient ainsi un combustible à teneur en matières volatiles convenable, brûlant avec peu de flamme et de pouvoir calorifique inférieur sur brut élevé.

Selon un aspect particulier de l'invention, un tel combustible se présente sous forme de granulés sensiblement cylindriques ou sensiblement sphériques de diamètre compris entre 5 et 40 millimètres.

Il peut notamment s'agir de "pellets" cylindriques ou de boulets.

Avantageusement, le bois desdites particules de bois est du bois de palettes ou de cagettes non traité.

De la sciure, des copeaux et/ou des plaquettes de bois déchiqueté peuvent également être utilisés pour mettre en oeuvre le combustible selon l'invention. Dans une variante de l'invention, il peut également être prévu de mettre en oeuvre du bois de récupération présentant une faible proportion d'adjuvants.

Dans au moins un mode de réalisation particulier de l'invention, lesdites issues appartiennent au groupe comprenant au moins :
- grains cassés ;
- glumes ;
- glumelles ;
- siliques ;
- feuilles ;
- tiges ;
- rafles.

Il peut avantageusement s'agir d'issues de maïs, de colza et/ou de tournesol. Des issues de blé, d'avoine, d'orge et/ou de chanvre peuvent également être utilisées.

Dans une variante de l'invention, au moins une desdites issues peut être du sarment de vigne et/ou de la farine de marc de raisin.

Avantageusement, lesdites issues sont à l'état naturel, c'est-à-dire ni imprégnées, ni revêtues d'une substance quelconque.

De préférence, lesdites fines de charbon fossile sont des fines d'anthracite ou d'un mélange dé houille et d'anthracite.

Dans un mode de réalisation particulier de l'invention, il peut être envisagé d'utiliser des fines de charbon sub-bitumeux ou de lignite, ou du schlamm.

De façon avantageuse, un combustible tel que décrit ci-dessus présente une densité comprise entre 450 et 650 kg/m³.

Ainsi, on réduit les coûts de transport et de stockage du combustible.

Par ailleurs il n'est dans certains cas pas nécessaire d'ajuster la quantité d'oxygène à apporter pour brûler le combustible, par rapport à du charbon.

Dans un mode de réalisation particulier de l'invention, un combustible tel que décrit ci-dessus présente une densité comprise entre 650 et 750 kg/m³.

Dans un mode de réalisation avantageux de l'invention, un tel combustible présente un pouvoir calorifique inférieur sur brut supérieur ou égal à 5,3 KW.h/kg, de préférence supérieur à 5,5 KW.h/kg et de façon encore plus préférentielle supérieur ou égal à 5,8 KW.h/kg.

Un tel combustible convient donc pour des chaudières ou des centrales au charbon performantes.

De façon préférentielle, un combustible tel que décrit ci-dessus présente un taux d'humidité inférieur à 12%, de préférence inférieur ou égal à 8% et supérieur à 5%.

Ainsi, l'accroissement du volume des fumées reste réduit.

Dans au moins un mode de réalisation particulier de l'invention, un tel combustible comprend de 0,01% à 3% d'un liant, tel que de la mélasse de l'amidon ou du lignosulfite, d'un agent minéral apte à neutraliser le chlore, tel que du sodium, et/ou d'un agent minéral apte à augmenter la température de fusion des cendres, tel que du carbonate de calcium.

Dans un mode de réalisation particulier de l'invention, il peut être prévu que le liant soit formé notamment à partir de farine basse et/ou du rémoulage.

Il peut également être envisagé d'incorporer de l'ammoniac et/ou de l'urée au combustible.

Selon un mode de réalisation particulier de l'invention, un combustible tel décrit ci-dessus comprend de 0,01% à 10% de caoutchouc et/ou de plastique recyclés, provenant de pneus ou de pièces plastiques en polyéthylène ou en polypropylène.

L'invention concerne également un procédé de fabrication d'un combustible tel que décrit ci-dessus, apte à être utilisé dans une chaudière ou un four industriel à charbon, caractérisé en ce qu'il comprend les étapes suivantes, dans cet ordre :
- mélange sous cisaillement de bois, d'un mélange d'au moins deux issues provenant d'opérations de triage, calibrage et tamisage de productions agricoles de céréales, d'oléagineux ou de protéagineux et de fines de charbon fossile ou de charbon de bois dans des proportions respectives de 40 à 60%, 20 à 30% et 10 à 25% de la masse dudit mélange;
- broyage dudit mélange, de sorte à former un broyat pulvérulent ;
- mélange dudit broyat pulvérulent ;
- compactage dudit broyat mélangé, de sorte à obtenir une pluralité de granulés compactés de densité comprise entre 450 et 650 kg/m³.

Selon un aspect particulier de l'invention, le procédé de fabrication décrit ci-dessus comprend, après ladite étape de compactage, une étape de refroidissement desdits granulés et/ou une étape d'application d'un agent anti-poussière, notamment d'une huile ou d'un co-produit soluble issu de l'industrie amidonnière, à la surface desdits granulés.

### 5. Liste des figures

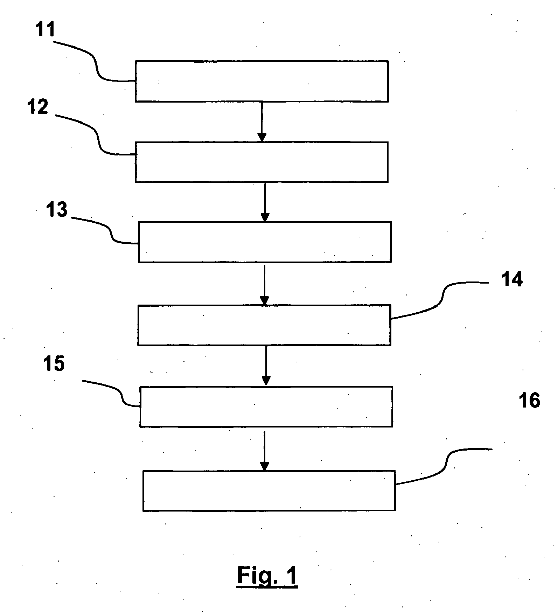

D'autres caractéristiques et avantages de l'invention apparaitront plus clairement à la lecture de la description suivante de modes de réalisation de l'invention, donnés à titre de simples exemples illustratifs et non limitatifs, et de la figure 1 annexée qui illustre les étapes d'un exemple de procédé de fabrication selon l'invention sous forme de schéma-bloc.

### 6. Description détaillée d'exemples de mode de réalisation de l'invention

Un premier exemple de composition d'un combustible selon l'invention est donné dans le tableau 1 ci-dessous :

**Tableau 1**

| Composant | Teneur massique (%) |
|---|---|
| fines d'anthracite | 23,1 |
| bois de classe A (bois de palette) | 50,0 |
| issues de colza (grains cassés, ...) | 10,2 |
| rafles de maïs | 16,7 |

Ce combustible se présente sous la forme de granulés cylindriques de 6 millimètres de diamètre et est avantageusement sans additif. L'humidité totale de ce premier exemple de combustible est de 6%.

Ce combustible est destiné à alimenter une chaudière conventionnelle à combustible solide, à lit fluidisé circulant d'une puissance de 35 MW.

L'alimentation de la chaudière avec cet exemple de combustible ne nécessite pas de transformation de la chaudière. L'excès d'air est maintenu au minimum, afin de garantir une combustion fumivore et une faible émission en monoxyde de carbone.

On présente en référence à la figure 1, de façon synoptique, les étapes d'un exemple de procédé de fabrication du premier exemple de combustible.

Dans une première étape 11, des fines d'anthracite, du bois déchiqueté de palette non traitée, des issues de colza et des rafles de maïs préalablement séchées au soleil sont successivement introduites par une trémie d'alimentation dans une chargeuse peseuse. Les composants du premier exemple de combustible sont acheminés par un convoyeur dans une mélangeuse, où ils sont mélangés sous cisaillement pendant 3 minutes (étape 12).

Après mélange, les composants mélangés sont déversés progressivement et avec un débit contrôlé dans un broyeur affineur à marteaux, où les composants du combustible, et notamment les morceaux de bois déchiquetés, sont transformé en poudre (étape 13).

Le broyat pulvérulent extrait du broyeur est ensuite mélangé de façon homogène dans une seconde mélangeuse (étape 14), puis transporté par un convoyeur vers une presse à granulé dans laquelle il est compacté sous forme de granulés cylindriques de 20 millimètre de long et de 6mm de diamètre d'une densité de 550kg/m³ (étape 15).

Les granulés sont refroidis en sortie de la presse à granulé par jets d'air lors d'une étape de refroidissement 16, puis stockés en silo après avoir été calibrés au travers d'un tamis.

Des camions viendront prélever ces granulés compactés du silo et les livrer à la centrale à combustible solide.

La composition d'un deuxième exemple de combustible selon l'invention, se présentant sous forme de boulets sensiblement sphériques de 36 millimètres de diamètre, est récapitulée dans le tableau 2 :

**Tableau2**

| Composant | Teneur massique (%) |
|---|---|
| fines d'anthracite | 13 % |
| bois de classe A (plaquette forestière) | 58 % |
| tiges et feuilles de maïs | 15 % |
| rafle de maïs | 11% |
| mélasse (liant) | 3% |

Dans ce deuxième exemple de combustible, la mélasse permet aux boulets de conserver leur forme, et notamment de ne pas se briser ou se décomposer en poussières, lors des opérations de manutention et pendant la phase initiale de la combustion.

Ce deuxième exemple de combustible est destiné à être utilisé dans une centrale à grille vibrante d'une capacité de 20 000 tonnes par an.

On donne dans le tableau 3 le détail de la composition d'un troisième exemple de combustible selon l'invention :

**Tableau3**

| Composant | Teneur massique (%) |
|---|---|
| fines de charbon de bois | 19 % |
| bois de classe A (palettes et cagettes) | 45 % |
| issues de tournesol | 15 % |
| rafles de maïs | 12 % |
| glumes de blé | 4% |
| glumes d'orge | 2% |
| carbonate de calcium | 2% |
| bicarbonate de soude | 1% |
| huile | traces |

Dans cet exemple de mode de réalisation de l'invention, à la sortie de la presse à pellet, de l'huile a été pulvérisée à la surface des granulés compactés avant de les refroidir, afin de limiter la quantité de poussières volantes lors de la manutention des pellets.

Dans un variante de ce mode de réalisation particulier de l'invention, il peut également être prévu de pulvériser de l'huile et/ou un coproduit soluble issu de l'industrie amidonnière sur la surface des granulés après refroidissement de ces derniers.

Dans une variante, il peut aussi être prévu de remplacer au moins partiellement les fines de charbon fossile ou de charbon de bois dans la composition du combustible par des graisses riches en carbone ou par toute autre matière convenable riche en carbone.

## Revendications

1. Combustible apte à être utilisé dans une chaudière ou un four industriel à charbon, se présentant sous forme de granulés compactés, **caractérisé en ce qu'**il comprend 40 à 60% en masse de particules de bois, 20 à 30% en masse d'un mélange d'au moins deux issues provenant d'opérations de triage, calibrage et tamisage de productions agricoles de céréales, d'oléagineux ou de protéagineux et 10 à 25% en masse de fines de charbon fossile ou de charbon de bois, en proportions.

2. Combustible selon la revendication 1, **caractérisé en ce qu'**il se présente sous forme de granulés sensiblement cylindriques ou sensiblement sphériques de diamètre compris entre 5 et 40 millimètres.

3. Combustible selon l'une quelconque des revendications 1 et 2, **caractérisé en ce que** le bois desdites particules de bois est du bois de palettes ou de cagettes non traité.

4. Combustible selon l'une quelconque des revendications 1 à 3, **caractérisé en ce que** lesdites issues appartiennent au groupe comprenant au moins :
- grains cassés ;
- glumes ;
- glumelles ;
- siliques ;
- feuilles ;
- tiges ;
- rafles.

5. Combustible selon l'une quelconque des revendications 1 à 4, caractérisé en ce lesdites fines de charbon fossile sont des fines d'anthracite ou d'un mélange de houille et d'anthracite.

6. Combustible selon l'une quelconque des revendications 1 à 5, **caractérisé en ce qu'**il présente une densité comprise entre 450 et 650 kg/m³.

7. Combustible selon l'une quelconque des revendications 1 à 6, **caractérisé en ce qu'**il présente un pouvoir calorifique inférieur sur brut supérieur ou égal à 5,3 KW.h/kg, de préférence supérieur à 5,5 KW.h/kg et de façon encore plus préférentielle supérieur ou égal à 5,8 KW.h/kg.

8. Combustible selon l'une quelconque des revendications 1 à 7, **caractérisé en ce qu'**il présente un taux d'humidité inférieur à 12%, de préférence inférieur ou égal à 8%.

9. Combustible selon l'une quelconque des revendications 1 à 8, **caractérisé en ce qu'**il comprend de 0,01% à 3% d'un liant, tel que de la mélasse ou du lignosulfite, d'un agent minéral apte à neutraliser le chlore, tel que du sodium, et/ou d'un agent minéral apte à augmenter la température de fusion des cendres, tel que du carbonate de calcium.

10. Procédé de fabrication d'un combustible selon l'une quelconque des revendications 1 à 9, apte à être utilisé dans une chaudière ou un four industriel à charbon, **caractérisé en ce qu'**il comprend les étapes suivantes, dans cet ordre :
- mélange sous cisaillement de bois, d'un mélange d'au moins deux issues provenant d'opérations de triage, calibrage et tamisage de productions agricoles de céréales, d'oléagineux ou de protéagineux et de fines de charbon fossile ou de charbon de bois dans des proportions respectives de 40 à 60%, 20 à 30% et 10 à 25% de la masse dudit mélange;
- broyage dudit mélange, de sorte à former un broyat pulvérulent ;
- mélange dudit broyat pulvérulent ;
- compactage dudit broyat mélangé, de sorte à obtenir une pluralité de granulés compactés de densité comprise entre 450 et 650 kg/m³.

11. Procédé de fabrication d'un combustible selon la revendication 10, **caractérisé en ce qu'**il comprend, après ladite étape de compactage, une étape de refroidissement desdits granulés et/ou une étape d'application d'un agent anti-poussière, notamment d'une huile, à la surface desdits granulés.

## Patentansprüche

1. Brennstoff, der für die Verwendung in einem Kohleheizkessel oder einem industriellen Kohleofen geeignet ist, der die Form von kompaktierten Pellets aufweist, **dadurch gekennzeichnet, dass** er 40 bis 60 Masse-% Holzpartikel, 20 bis 30 Masse-% eines Gemischs aus mindestens zwei Abfällen, die aus Sortier-, Kalibrier- und Siebvorgängen der landwirtschaftlichen Produktion von Getreide, Ölsaaten und Eiweißpflanzen stammen, und 10 bis 25 Masse-% fossile Feinkohle oder Holzkohle, in Anteilen umfasst.

2. Brennstoff nach Anspruch 1, **dadurch gekennzeichnet, dass** er die Form von im Wesentlichen zylinderförmigen oder kugelförmigen Pellets mit einem Durchmesser im Bereich zwischen 5 und 40 Millimeter aufweist.

3. Brennstoff nach einem der Ansprüche 1 und 2, **dadurch gekennzeichnet, dass** es sich bei dem Holz der Holzpartikel um Holz von Paletten oder unbehandelten Kisten handelt.

4. Brennstoff nach einem der Ansprüche 1 bis 3, **dadurch gekennzeichnet, dass** die Abfälle zu der Gruppe gehören, die mindestens Folgendes umfasst:
- Kornbruch;
- Hüllspelzen;
- Deckspelzen;
- Schoten;
- Blätter;
- Stängel;
- Kämme.

5. Brennstoff nach einem der Ansprüche 1 bis 4, **dadurch gekennzeichnet, dass** die fossile Feinkohle Anthrazit-Feinkohle oder Feinkohle aus einem Gemisch aus Steinkohle und Anthrazit ist.

6. Brennstoff nach einem der Ansprüche 1 bis 5, **dadurch gekennzeichnet, dass** er eine Dichte im Bereich zwischen 450 und 650 kg/m³ aufweist.

7. Brennstoff nach einem der Ansprüche 1 bis 6, **dadurch gekennzeichnet, dass** er einen unteren Bruttoheizwert größer oder gleich 5,3 KW.h/kg, bevorzugt größer 5,5 KW.h/kg und noch stärker bevorzugt größer oder gleich 5,8 KW.h/kg aufweist.

8. Brennstoff nach einem der Ansprüche 1 bis 7, **dadurch gekennzeichnet, dass** er einen Feuchtegehalt kleiner 12 %, bevorzugt kleiner oder gleich 8 % aufweist.

9. Brennstoff nach einem der Ansprüche 1 bis 8, **dadurch gekennzeichnet, dass** er 0,01 % bis 3 % eines Bindemittels, wie beispielsweise Melasse oder Lignosulfit, eines anorganischen Mittels, dass zur Chlorneutralisierung geeignet ist, wie beispielsweise Natrium, und/oder eines anorganischen Mittels, das zur Erhöhung der Ascheschmelztemperatur geeignet ist, wie beispielsweise Calciumcarbonat, umfasst.

10. Verfahren zur Herstellung eines Brennstoffs nach einem der Ansprüche 1 bis 9, das zur Verwendung in einem Kohleheizkessel oder in einem industriellen Kohleofen geeignet ist, **dadurch gekennzeichnet, dass** es die folgenden Schritte in dieser Reihenfolge umfasst:
- Schermischen von Holz, einem Gemisch aus mindestens zwei Abfällen, die aus Sortier-, Kalibrier- und Siebvorgängen der landwirtschaftlichen Produktion von Getreide, Ölsaaten und Eiweißpflanzen stammen, und fossiler Feinkohle oder Holzkohle, jeweils in Anteilen von 40 bis 60 %, 20 bis 30 % bzw. 10 bis 25 % der Masse des Gemischs;
- Zerkleinern des Gemischs derart, dass ein pulverförmiges Häckselgut gebildet wird;
- Mischen des pulverförmigen Häckselguts;
- Kompaktieren des gemischten Häckselguts derart, dass mehrere kompaktierte Pellets mit einer Dichte im Bereich zwischen 450 und 650 kg/m³ erhalten werden.

11. Verfahren zur Herstellung eines Brennstoffs nach Anspruch 10, **dadurch gekennzeichnet, dass** es nach dem Schritt zum Kompaktieren einen Schritt zum Abkühlen der Pellets und/oder einen Schritt zum Auftragen eines Staubbindemittels, insbesondere eines Öls, auf die Oberfläche der Pellets umfasst.

## Claims

1. A fuel suitable to be used in a boiler or industrial coal furnace, in the form of compacted pellets, **characterised in that** it comprises 40 to 60% mass of wood chips, 20 to 30% mass of a mixture of at least two derivatives from processing operations, calibration and sieving of agricultural productions of grains, oil rich or protein rich crops and 10 to 25% mass of fine fossil coal or charcoal, in proportion.

2. A fuel according to claim 1, **characterised in that** it presents the form of substantially cylindrical or spherical granules with a diameter of between 5 and 40 mm.

3. A fuel according to any of claims 1 and 2, **characterised in that** the wood of said wood chips is of untreated wooden pallets or crates,

4. A fuel according to any of claims 1 to 3, **characterised in that** said derivatives belong to the group including at least:
- broken grains;
- glumes;
- husks;
- pods;
- leaves;
- stems;
- stalks.

5. The fuel according to any of claims 1 to 4, **characterised in that** said fine fossil coal are of fine anthracite or a mixture of coal and anthracite.

6. The fuel according to any of claims 1 to 5, **characterised in that** it has a density of between 450 and 650 kg/m³.

7. The fuel according to any of claims 1 to 6, **characterised in that** it presents a lower gross heating value higher or equal to 5.3 kw.h/kg, preferably greater than 5.5 KW;h/kg and more preferentially higher or equal to 5.8 kw.h/kg.

8. The fuel according to any of claims, 1 to 7, **characterised in that** it presents a humidity level of less than 12%, preferably less than or equal to 8%.

9. The fuel according to any of claims 1 to 8, **characterised in that** it includes 0.01% to 3% of a binding agent, such as molasses or of the lignosulfonate, a mineral agent able to neutralise the chlorine, such as sodium, and/or a mineral agent able to increase the ash melting temperature, such as calcium carbonate.

10. A manufacturing method of a fuel according to any of claim 9, suitable to be used in a boiler or industrial coal furnace, **characterised in that** it comprises the following steps, in this order:
- Mix wood under shear stress, with a mixture of at least two derivatives from processing operations, calibration and sieving of agricultural productions of cereals, oil rich or protein rich crops and fine fossil coal or charcoal in the respective proportions of 40 to 60%, 20 to 30% and 10 to 25% of the said mass mixture;
- grinding of said mixture, to form a ground powder;
- mixing of said ground powder;
- compaction of the said ground mixture, to obtain a plurality of compacted pellets of a density between 450 and 650 kg/m³.

11. The manufacturing method of a fuel according to claim 10, **characterised in that** it comprises, after the said stage of compaction, a cooling stage of said pellets and/or a step of applying an anti-dust agent, particularly an oil, to the surface of those granules.
